# EUROPEAN PATENT SPECIFICATION

(11) **EP 4 072 052 B1**
(45) Date of publication and mention of the grant of the patent: **12.02.2025**
(21) Application number: 19958416.0
(22) Date of filing: 31.12.2019
(51) Int. Cl.: H04L 1/00

(54) **DATA SENDING METHOD, RECEIVING METHOD, SENDING DEVICE AND RECEIVING DEVICE**
DATENSENDEVERFAHREN, EMPFANGSVERFAHREN, SENDEVORRICHTUNG UND EMPFANGSVORRICHTUNG
PROCÉDÉ D'ENVOI DE DONNÉES, PROCÉDÉ DE RÉCEPTION, DISPOSITIF D'ENVOI ET DISPOSITIF DE RÉCEPTION

(43) Date of publication of application: 12.10.2022
(60) Divisional application: 24219082.5
(73) Proprietor: Huawei Technologies Co., Ltd., Shenzhen, Guangdong 518129 (CN)
(72) Inventor: QIU, Xianwen, Shenzhen, Guangdong 518129 (CN)
(74) Representative: Maiwald GmbH
(86) International application number: PCT/CN2019/130933
(87) International publication number: WO 2021/134694

(56) References cited:
- WO-A1-2018/111612
- WO-A1-2019/019827
- WO-A1-2019/119389
- CN-A- 107 888 345
- CN-A- 107 888 345
- CN-A- 108 156 074
- CN-A- 108 809 901
- CN-A- 109 218 061
- CN-A- 109 560 864
- US-A1- 2019 173 856
- US-A1- 2019 288 936
- US-A1- 2020 007 256

## Description

### TECHNICAL FIELD

This application relates to the communications field, and in particular, to a data sending method, a data receiving method, a data sending apparatus, and a data receiving apparatus.

### BACKGROUND

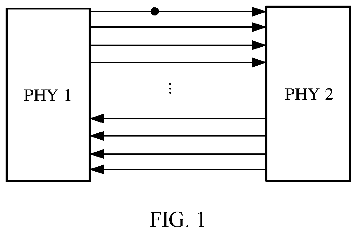

Over the past decade, network service traffic has been growing rapidly, which promotes a rapid increase in service bandwidth of a communications device. An interface speed of the communications device is increased from 10 M bandwidth to 100 M bandwidth, and then increased to 1 G or 10 G. A service speed is increased by several times every few years to meet requirements of the network service traffic. To meet service transmission requirements by the communications device, the International Organization for Standardization defines the IEEE 802.3 Ethernet protocol. The IEEE 802.3 Ethernet protocol proposes to bond a plurality of 100G physical (PHY) channels to form a transmission channel with a high service rate. FIG. 1 is a schematic diagram of a general structure of the IEEE 802.3 Ethernet protocol. N 25G physical channels are bonded according to the flexible Ethernet (FlexE) protocol to form an Nx25G transmission channel, and a service transmission rate of the Nx25G transmission channel is equivalent to a service transmission rate of Nx25G physical channels. This not only meets a transmission requirement of an Nx25G service, but also resolves an economic value problem of service transmission. An Ethernet group refers to a group in which an Ethernet PHY is divided into N physical channels. Physical channels between members at two ends of the Ethernet group form a communications link. In the IEEE802.3 Ethernet protocol, a plurality of physical channels are bonded to form a logical channel for service transmission. When one physical channel is faulty, the entire logical channel is faulty. For example, if one physical channel is interrupted, the entire logical channel is interrupted. Therefore, in the current flexible Ethernet, when a physical channel in either a receiving direction or a sending direction is interrupted, a peer member cannot receive data through the logical channel formed by bonding the plurality of physical channels, and working reliability is poor.

Chinese patent application CN 107 888 345 A discloses an information transmission method applied to a local end of a Flexible Ethernet network structure. According to the method, a local end acquires error code state information and sends it to an opposite end.

United States patent application US 2019/288936 A1 discloses a protection switching method, wherein, when links that carry a client service are unavailable, a transmission of the client service can be switched from said links to a protection link.

Chinese patent application CN 109 560 864 A discloses a data transmission method wherein protection data according to original data is obtained and transferred to improve network reliability.

International patent application WO 2019/019827 A1 discloses a data transmission method wherein data transmission is performed by working members and protective members and, when a working member meets a preset switching condition, a physical channel corresponding to the working member and a physical channel corresponding to a protective member are switched.

### SUMMARY

Embodiments of this application provide a data sending method, a data receiving method, a data sending apparatus, and a data receiving apparatus, so as to improve reliability of data transmission in the Ethernet.

According to a first aspect, an embodiment of this application provides a data sending method, including: A sending device determines a plurality of non-faulty physical channels from a plurality of physical channels; the sending device splits and encodes to-be-sent data to obtain a plurality of encoded data segments; and the sending device transmits the plurality of encoded data segments through the plurality of non-faulty physical channels.

According to the foregoing method, the to-be-sent data is split into a plurality of data segments, the data segments obtained through splitting are separately encoded, and each encoded data segment is transmitted as separate data. In this case, when one or more physical channels used for transmitting a data segment are faulty, a non-faulty physical channel may be used for transmission. In this way, it is ensured that a receiving device can receive the complete to-be-sent data, so that reliability of data transmission in a flexible Ethernet group is improved.

In a possible design, that the sending device splits and encodes to-be-sent data includes: The sending device splits the to-be-sent data into a plurality of data segments of a same length, and separately encodes each data segment.

According to the foregoing method, when it is determined that a physical channel is faulty and a data segment is transmitted through a non-faulty physical channel, because all segments have a same length, when data is transmitted through the non-faulty physical channel, an encoding mode of the data segment does not change. In this way, convenience of data transmission is improved.

That the sending device transmits the plurality of encoded data segments through the plurality of non-faulty physical channels includes: The sending device determines a transmission rate required by a first data segment in the encoded data segments, and sends the first data segment through at least one non-faulty physical channel based on the transmission rate required by the first data segment.

When data is transmitted by using the foregoing method, because a transmission rate of a single physical channel is limited, when a transmission rate required by a data segment is relatively high, the transmission rate of the data segment may be increased by bonding a plurality of physical channels, so as to meet a transmission rate requirement.

The sending the first data segment through at least one non-faulty physical channel based on the transmission rate required by the first data segment includes: determining a transmission rate of each physical channel; and determining, based on a ratio of the transmission rate required by the first data segment to the transmission rate of each physical channel, the at least one physical channel used for transmitting the first data segment, and sending the first data segment through the at least one physical channel.

According to the foregoing method, a quantity of physical channels used for transmitting a data segment is determined based on a transmission rate required by the data segment and a transmission rate of a single physical channel, and the data segment is transmitted through the corresponding quantity of physical channels, so as to meet the transmission rate required by the data segment.

In a possible design, that a sending device determines a plurality of non-faulty physical channels from a plurality of physical channels includes: The sending device sends test data to the receiving device through the plurality of physical channels; and the sending device determines the plurality of non-faulty physical channels from the plurality of physical channels based on a feedback of the receiving device on the test data.

According to the foregoing method, before the sending device sends the to-be-sent data, the sending device may send the test data to the receiving device through the plurality of physical channels. The sending device determines the non-faulty physical channel based on the feedback of the receiving device on the test data. In this way, data is transmitted through the non-faulty physical channel, so as to ensure that the receiving device can receive the complete data.

According to a second aspect, an embodiment of this application provides a data receiving method, including: A receiving device determines a plurality of non-faulty physical channels from a plurality of physical channels; the receiving device receives a plurality of data segments from the plurality of non-faulty physical channels; and the receiving device decodes the plurality of data segments to obtain a plurality of decoded data segments, and reassembles the plurality of decoded data segments to obtain received data.

According to the foregoing method, because a sending device sends to-be-sent data to the receiving device through a plurality of non-faulty physical channels, the receiving device may receive a plurality of data segments from the plurality of non-faulty physical channels to obtain complete data, and decode the plurality of received data segments and reassemble a plurality of decoded data segments to obtain received data. This ensures integrity of the data received by the receiving device and improves reliability of data transmission in the Ethernet.

In a possible design, that the receiving device receives a plurality of data segments from the plurality of non-faulty physical channels includes: The receiving device receives the plurality of data segments of a same length from the plurality of non-faulty physical channels.

According to the foregoing method, when it is determined that a physical channel is faulty and the receiving device receives a data segment through a non-faulty physical channel, because all segments have a same length, when the data segment is decoded, a decoding mode of the data segment does not change. In this way, efficiency of data processing is improved.

That the receiving device receives a plurality of data segments from the plurality of non-faulty physical channels includes: The receiving device determines a transmission rate required by a second data segment in the plurality of data segments, and receives the second data segment through at least one non-faulty physical channel based on the transmission rate required by the second data segment.

According to the foregoing method, because a transmission rate of a single physical channel is limited, when a transmission rate requirement required by a data segment is relatively high, the transmission rate of the data segment may be increased by bonding a plurality of physical channels, so as to meet a transmission rate requirement.

The receiving the second data segment through at least one non-faulty physical channel based on the transmission rate required by the second data segment includes: determining a transmission rate of each physical channel; and determining, based on a ratio of the transmission rate required by the second data segment to the transmission rate of each physical channel, the at least one physical channel used for transmitting the second data segment, and receiving the second data segment through the at least one physical channel.

According to the foregoing method, a quantity of physical channels used for transmitting a data segment may be determined based on a transmission rate required by the data segment and a transmission rate of a single physical channel, and the data segment is transmitted through the corresponding quantity of physical channels, so as to meet the transmission rate required by the data segment.

In a possible design, the data receiving method provided in the second aspect of this application further includes: The receiving device receives test data sent by the sending device, and sends a feedback on the test data to the sending device based on a receiving status of the test data.

According to the foregoing method, the receiving device may receive the test data through a physical channel, and send the receiving status of the test data to the sending device, so that the sending device determines a non-faulty physical channel. In this way, data is transmitted through the non-faulty physical channel.

According to a third aspect, an embodiment of this application provides a data sending apparatus. The apparatus has a function of implementing the method example in the first aspect. The function may be implemented by hardware, or may be implemented by hardware executing corresponding software. The hardware or the software includes one or more modules corresponding to the foregoing function.

In a possible design, a structure of the data sending apparatus includes a determining unit, a processing unit, and a sending unit. These units may perform corresponding functions in the foregoing method example. For details, refer to detailed descriptions in the method example. Details are not described herein again.

According to a fourth aspect, an embodiment of this application provides a data receiving apparatus. The apparatus has a function of implementing the method example in the second aspect. The function may be implemented by hardware, or may be implemented by hardware executing corresponding software. The hardware or the software includes one or more modules corresponding to the foregoing function.

In a possible design, a structure of the data receiving apparatus includes a determining unit, a receiving unit, and a processing unit. These units may perform corresponding functions in the foregoing method example. For details, refer to detailed descriptions in the method example. Details are not described herein again.

### BRIEF DESCRIPTION OF DRAWINGS

FIG. 1 is a schematic diagram of an architecture of an Ethernet system according to an embodiment of this application;
FIG. 2 is a schematic flowchart of a data sending method and a data receiving method according to an embodiment of this application;
FIG. 3A and FIG. 3B are a schematic diagram 1 of transmission of to-be-sent data according to an embodiment of this application;
FIG. 4A and FIG. 4B are a schematic diagram 2 of transmission of to-be-sent data according to an embodiment of this application;
FIG. 5A and FIG. 5B are a schematic diagram 3 of transmission of to-be-sent data according to an embodiment of this application;
FIG. 6 is a schematic diagram of a structure of a data sending apparatus according to an embodiment of this application; and
FIG. 7 is a schematic diagram of a structure of a data receiving apparatus according to an embodiment of this application.

### DESCRIPTION OF EMBODIMENTS

FIG. 1 is a schematic diagram of an architecture of a possible Ethernet system to which an embodiment of this application is applicable. Specifically, an architecture of a flexible Ethernet system shown in FIG. 1 includes a transmission device 1 (represented by a PHY1 in FIG. 1), a transmission device 2 (represented by a PHY2 in FIG. 1), and N physical transmission channels used for transmitting data between the transmission device 1 and the transmission device 2. The transmission device 1 and the transmission device 2 both support the IEEE 802.3 Ethernet protocol.

If the N physical channels are bonded into a large logical channel according to the IEEE802.3 Ethernet protocol, when sending data according to the IEEE802.3 Ethernet protocol, the transmission device 1 encodes to-be-sent data and splits encoded data into N data segments, sends a first data segment in the N split data segments to a first physical channel, sends a second data segment to a second physical channel, and by analogy, sends an Nth data segment to an Nth physical channel. When receiving data, the transmission device 2 receives the first data segment from the first physical channel, receives the second data segment from the second physical channel, and by analogy, receives the Nth data segment from the Nth physical channel, and reassembles and decodes the received N data segments.

When the N physical channels are bonded into the large logical channel according to the IEEE802.3 Ethernet protocol, a transmission rate of the to-be-sent data is a sum of transmission rates of data segments transmitted on all physical channels. Therefore, the transmission rate of the to-be-sent data is increased. However, during data transmission in this mode, once any one or more of the N physical channels used for data transmission are faulty, the transmission device 2 cannot receive a complete data segment. If the transmission device 2 cannot receive complete data, the transmission device 2 cannot perform decoding processing on reassembled data. As a result, data transmission fails.

Based on this, embodiments of this application provide a data sending method, a data receiving method, a data sending apparatus, and a data receiving apparatus, so as to resolve the foregoing problem that in the IEEE 802.3 Ethernet protocol, normal service transmission cannot be performed if data transmission fails because one or more physical channels on a transmission path are faulty.

The following specifically describes a data sending solution provided in this application with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that, in the description of this application, terms such as "first" and "second" are merely used for distinguishing and description, but should not be understood as indicating or implying relative importance, or should not be understood as indicating or implying a sequence.

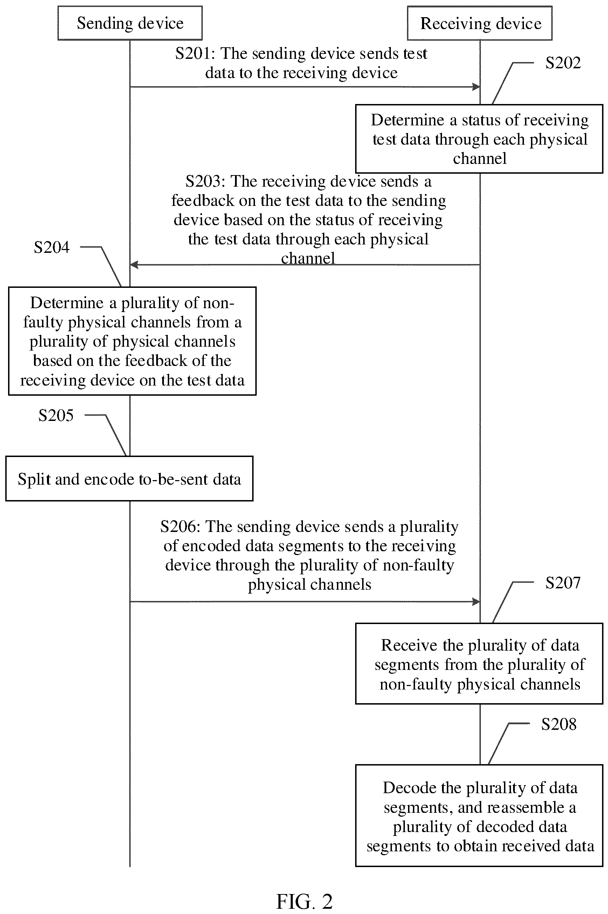

FIG. 2 is a schematic flowchart of a data sending method and a data receiving method according to an embodiment of this application. The data sending method is implemented by a sending device that is disposed in a transmission device 1 and that supports the IEEE 802.3 Ethernet protocol. The data receiving method is implemented by a receiving device that is disposed in a transmission device 2 and that supports the IEEE 802.3 Ethernet protocol. Specifically, the data sending method and the data receiving method mainly include the following steps.

S201: The sending device sends test data to the receiving device through a plurality of physical channels.

During specific implementation, when the test data is sent to the receiving device through the plurality of physical channels, the test data may be sent directly and separately to the receiving device through the plurality of physical channels.

Optionally, to reduce a data transmission amount, the test data may alternatively be split into a plurality of test fields whose quantity is the same as that of the plurality of physical channels, where the plurality of test fields are in a one-to-one correspondence with the plurality of physical channels; and send each of the plurality of test fields to the receiving device through a corresponding physical channel.

S202: The receiving device determines a status of receiving test data through each physical channel.

Specifically, the receiving device receives test data from a corresponding physical channel, and determines status information (a faulty state and a non-faulty state) of each physical channel based on the status of receiving the test data through each physical channel.

S203: The receiving device sends a feedback on the test data to the sending device based on the status of receiving the test data through each physical channel.

S204: The sending device determines a plurality of non-faulty physical channels from the plurality of physical channels based on the feedback of the receiving device on the test data.

S205: The sending device splits and encodes to-be-sent data to obtain a plurality of encoded data segments. A quantity of data segments obtained through splitting by the sending device may be less than or equal to a quantity of the plurality of non-faulty physical channels.

Optionally, the sending device splits the to-be-sent data into a plurality of data segments of a same length, and encodes each data segment to obtain the plurality of encoded data segments.

Before the to-be-sent data is split, 64/66 conversion is first performed on the to-be-sent data, and a 64-bit data block is extended into a 66-bit information block. The IEEE802.3 Ethernet protocol is located at a 64-bit to 66-bit block conversion layer, and 66-bit data blocks are sorted and split. A 25G service is used as an example. The to-be-sent data is split into a plurality of 66-bit data blocks, every four 66-bit data blocks are grouped into a data block group (a data segment), and each data block group is a 257-bit data block.

After the to-be-sent data is split into the plurality of data segments and before forward error correction (FEC) encoding is performed separately on the plurality of data segments, scrambling processing is performed on each data block group, and an alignment marker (AM marker) is inserted at an interval of Y data block groups. After the alignment marker is inserted, FEC encoding is performed on the data segment and then an alignment marker is inserted, and by analogy. In this way, an alignment marker is periodically inserted, and an interval between two adjacent alignment markers is a data block of Yx257 bits. Y is a positive integer greater than 1.

S206: The sending device sends the plurality of encoded data segments to the receiving device through the plurality of non-faulty physical channels.

When the plurality of non-faulty physical channels are to be bonded into a large logical channel according to the IEEE802.3 Ethernet protocol, the sending device splits and encodes the to-be-sent data to obtain the plurality of encoded data segments, and bonds the plurality of non-faulty physical channels into the large logical channel. When sending the to-be-sent data, the sending device may send a first encoded data block group (a first data segment) to a first physical channel, send a second encoded data block group (a second data segment) to a second physical channel, and by analogy, send all data block groups to the plurality of physical channels in an average and polling manner; or may send a last data block group to a first physical channel, send a penultimate data block group to a second physical channel, and by analogy, send all data block groups to the plurality of physical channels in an average and polling manner. The data block groups on the plurality of physical channels are completely aligned when being sent. In this way, the plurality of physical channels can be bonded to form the large logical channel.

It should be noted that a difference between the data sending method in this embodiment of this application and a data transmission method by using the IEEE 802.3 Ethernet in a conventional technology lies in that: In this embodiment of this application, when it is determined that a physical channel is faulty, the to-be-sent data may be transmitted through a non-faulty physical channel, so that it is ensured that the receiving device can receive complete data. In this way, a data transmission rate is increased and a problem that data transmission fails due to a fault of a physical channel is resolved. In addition, all data segments obtained through splitting have a same length, that is, all the data segments have a same encoding mode. Therefore, when a physical channel is faulty and another physical channel is used for transmission, the data segment may be directly encoded. In this way, data processing is simple and fast.

According to the invention, when the plurality of encoded data segments are transmitted through the plurality of non-faulty physical channels, if a transmission rate required by a data segment is relatively high but a transmission rate of a single physical channel is limited, the sending device may first determine a transmission rate required by the first data segment in the encoded data segments, and send the first data segment through at least one non-faulty physical channel based on the transmission rate required by the first data segment. The first data segment may be any data segment in the plurality of encoded data segments.

Specifically, when the first data segment is to be sent through the at least one non-faulty physical channel based on the transmission rate required by the first data segment, a transmission rate of each physical channel is first determined. Then, the at least one physical channel used for transmitting the first data segment is determined based on a ratio of the transmission rate required by the first data segment to the transmission rate of each physical channel, and the first data segment is sent through the at least one physical channel.

For example, the transmission rate of each physical channel is 25 Gbps, if the transmission rate required by the first data segment is 50 Gbps, two physical channels are required to transmit the first data segment, to meet the transmission rate required by the first data segment.

Specifically, when the first data segment is to be transmitted through a plurality of physical channels, the first data segment is split into a plurality of sub-data segments, and the plurality of sub-data segments are transmitted through the plurality of physical channels.

S207: The receiving device receives the plurality of data segments from the plurality of non-faulty physical channels. A quantity of data segments may be less than or equal to a quantity of the plurality of non-faulty physical channels.

Optionally, the receiving device receives the plurality of data segments of a same length from the plurality of non-faulty physical channels.

Specifically, when bonding the plurality of non-faulty physical channels into a large logical channel according to the IEEE802.3 Ethernet protocol, the receiving device bonds the plurality of non-faulty physical channels into one large logical channel, and receives the plurality of data segments from the plurality of non-faulty physical channels. When receiving the plurality of data segments, the receiving device may receive the first data block group (the first data segment) from the first physical channel, receive the second data block group (the second data segment) from the second physical channel, and by analogy, receive the plurality of data segments from the plurality of non-faulty physical channels. In this way, the plurality of non-faulty physical channels can be bonded to form the large logical channel.

According to the invention, when receiving the plurality of data segments through the plurality of non-faulty physical channels, if a transmission rate required by a data segment is relatively high but a transmission rate of a single physical channel is limited, the receiving device determines a transmission rate required by the second data segment in the plurality of data segments, and receives the second data segment through at least one non-faulty physical channel based on the transmission rate required by the second data segment. The second data segment may be any data segment in the plurality of data segments.

Specifically, when the second data segment is to be received through the at least one non-faulty physical channel based on the transmission rate required by the second data segment, a transmission rate of each physical channel is first determined. Then, the at least one physical channel used for transmitting the second data segment is determined based on a ratio of the transmission rate required by the second data segment to the transmission rate of each physical channel, and the second data segment is received through the at least one physical channel.

When the second data segment is received through a plurality of physical channels, a plurality of data segments are received from the plurality of physical channels, and the plurality of obtained data segments are reassembled to obtain the second data segment.

S208: The receiving device decodes the plurality of data segments to obtain a plurality of decoded data segments, and reassembles the plurality of decoded data segments to obtain received data.

Before the plurality of data segments are decoded, alignment markers are aligned for the plurality of received data segments, the plurality of data blocks and the plurality of data segments are aligned by using positions of the alignment markers as a reference, and FEC decoding processing is performed based on the aligned data segments.

When the plurality of decoded data segments are reassembled, descrambling processing is performed on the plurality of decoded data segments. A plurality of descrambling-processed data segments are converted into 257-bit data blocks, the plurality of 257-bit data blocks are converted into 66-bit data blocks, and the plurality of 66-bit data segments obtained through conversion are reassembled.

It should be noted that a difference between the data receiving method in this embodiment of this application and the data transmission method by using the IEEE 802.3 Ethernet in the conventional technology lies in that: In this embodiment of this application, when it is determined that a physical channel is faulty, the to-be-sent data may be transmitted through a non-faulty physical channel. The receiving device may also receive, through the non-faulty physical channel, the to-be-sent data sent by the sending device, to obtain complete received data. In this way, a problem that data transmission fails due to a fault of a physical channel is resolved. In addition, all data segments have a same length, that is, all the data segments have a same encoding mode and a same decoding mode. Therefore, when a physical channel is faulty and another physical channel is used for transmission, the receiving device may directly decode the data segment. In this way, data processing is simple and fast.

The following describes in detail the data sending method and the data receiving method provided in this application with reference to embodiments.

### Embodiment 1

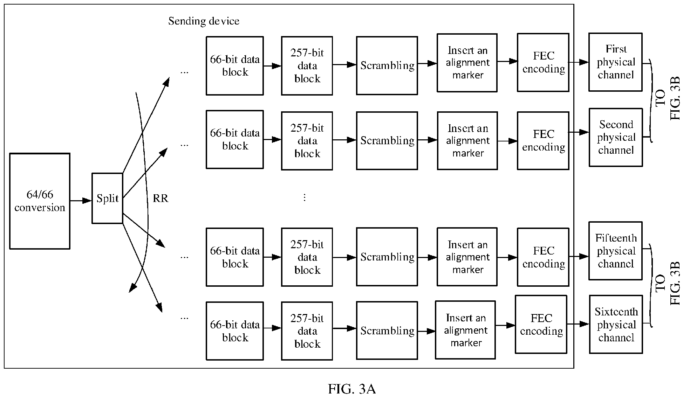

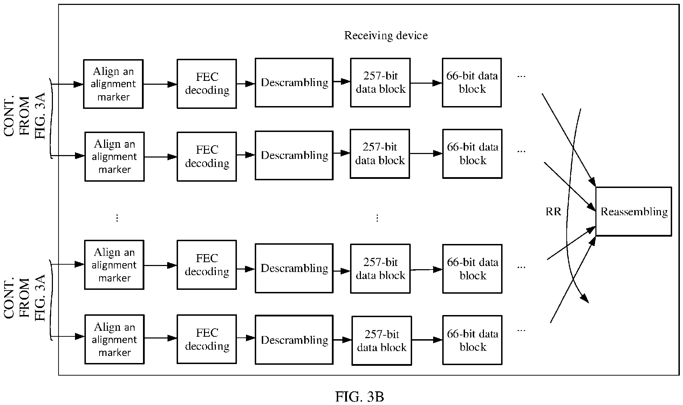

FIG. 3A and FIG. 3B are a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into 16 data segments, and a transmission rate required by each data segment is 25 Gbps, each data segment is transmitted through one non-faulty physical channel.

A sending device first converts the to-be-sent data from 64 bits into 66 bits; splits the to-be-sent data that is converted into 66 bits into 4x16 66-bit data blocks, where every four data blocks form one data block group (each data block group is a 257-bit data block); performs scrambling processing on each data block group, and inserts an alignment marker into each data block group; separately performs FEC encoding processing on the 16 data block groups obtained through splitting; and sends a first data block group to a first physical channel, sends a second data block group to a second physical channel, and by analogy, sends a sixteenth data block group to a sixteenth physical channel.

A receiving device receives the to-be-sent data through the 16 non-faulty physical channels. Specifically, the first data block group is first received from the first physical channel, the second data block group is received from the second physical channel, and by analogy, the sixteenth data block group is received from the sixteenth physical channel. Alignment markers of the received data block groups are separately locked, and the 16 data block groups are aligned by using positions of the locked alignment markers as a reference. FEC decoding processing is separately performed on the aligned data block groups. Descrambling processing is performed on FEC-decoded 16 data block groups. Each of descrambled 16 data block groups is converted into a 257-bit data block, each of the 16 257-bit data blocks is converted into a 66-bit data block, and the 16 data blocks that are converted into 66-bit data blocks are reassembled, to obtain received data.

### Embodiment 2

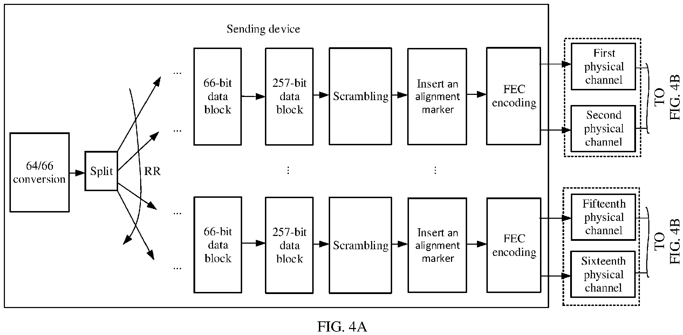

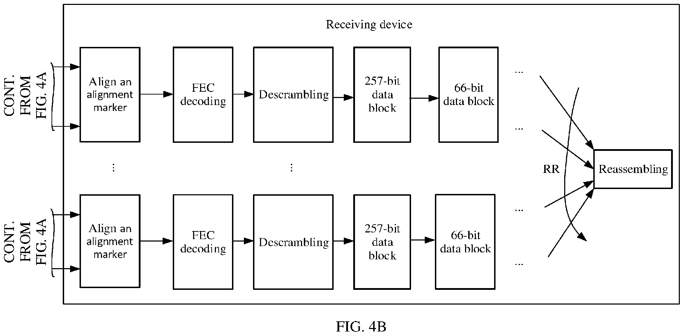

FIG. 4A and FIG. 4B are a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into eight data segments, and a transmission rate required by each data segment is 50 Gbps, data transmission is performed on each data segment through two non-faulty physical channels.

A sending device first converts the to-be-sent data from 64 bits into 66 bits; splits the to-be-sent data that is converted into 66 bits into 4x8 66-bit data blocks, where every four data blocks form one data block group (each data block group is a 257-bit data block); performs scrambling processing on each data block group, and inserts an alignment marker into each data block group; separately performs FEC encoding processing on the eight data block groups obtained through splitting; and sends a first data block group to a first physical channel and a second physical channel, sends a second data block group to a third physical channel and a fourth physical channel, and by analogy, sends an eighth data block group to a fifteenth physical channel and a sixteenth physical channel.

During specific implementation, when the first data block group is to be sent to the first physical channel and the second physical channel, the first data block group is split into two sub-data segments. A first sub-data segment is sent to the first physical channel. A second sub-data segment is sent to the second physical channel.

Specifically, a receiving device receives the first data block group from the first physical channel and the second physical channel, receives the second data block group from the third physical channel and the fourth physical channel, and by analogy, receives the eighth data block group from the fifteenth physical channel and the sixteenth physical channel; separately locks alignment markers of the received data block groups, aligns the eight data block groups by using positions of the locked alignment markers as a reference; separately performs FEC decoding processing on the aligned data block groups; performs descrambling processing on FEC-decoded eight data block groups; converts each of descrambled eight data block groups into a 257-bit data block, converts each of the eight 257-bit data blocks into a 66-bit data block; and reassembles the eight data blocks that are converted into 66-bit data blocks, to obtain received data.

During specific implementation, when receiving the first data block group from the first physical channel and the second physical channel, the receiving device receives the first sub-data segment of the first data block group from the first physical channel, receives the second sub-data segment of the first data block group from the second physical channel, and reassembles the first sub-data segment and the second sub-data segment to obtain the first data block group.

### Embodiment 3

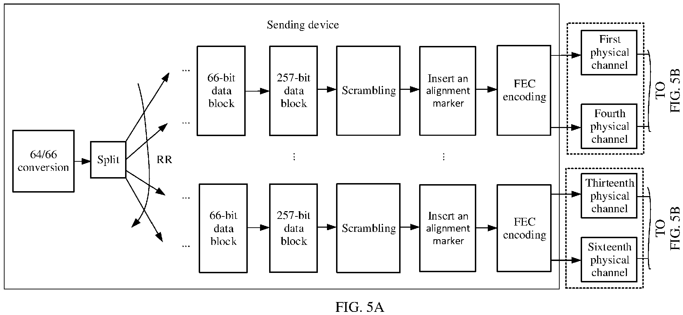

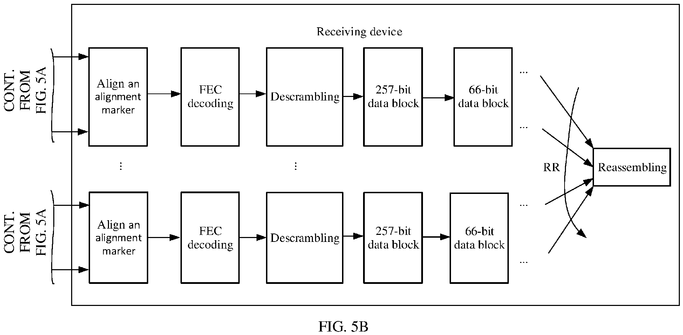

FIG. 5A and FIG. 5B are a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into four data segments, a transmission rate required by each data segment is 100 Gbps, and one data segment may be transmitted through four non-faulty physical channels.

A sending device first converts the to-be-sent data from 64 bits into 66 bits; splits the to-be-sent data that is converted into 66 bits into 4x4 66-bit data blocks, where every four data blocks form one data block group (each data block group is a 257-bit data block); performs scrambling processing on each data block group, and inserts an alignment marker into each data block group; separately performs FEC encoding processing on the four data block groups obtained through splitting; and sends a first data block group to a first physical channel, a second physical channel, a third physical channel, and a fourth physical channel, sends a second data block group to a fifth physical channel, a sixth physical channel, a seventh physical channel, and an eighth physical channel, sends a third data block group to a ninth physical channel, a tenth physical channel, an eleventh physical channel, and a twelfth physical channel, and sends a fourth data block group to the thirteenth physical channel, the fourteenth physical channel, the fifteenth physical channel, and the sixteenth physical channel.

During specific implementation, when the first data block group is to be sent to the first physical channel, the second physical channel, the third physical channel, and the fourth physical channel, the first data block group is first split into four sub-data segments. A first sub-data segment is sent to the first physical channel. A second sub-data segment is sent to the second physical channel. A third sub-data segment is sent to the third physical channel. A fourth sub-data segment is sent to the fourth physical channel.

A receiving device receives the first data block group from the first physical channel, the second physical channel, the third physical channel, and the fourth physical channel, receives the second data block group from the fifth physical channel, the sixth physical channel, the seventh physical channel, and the eighth physical channel, and by analogy, receives the fourth data block group from the thirteenth physical channel, the fourteenth physical channel, the fifteenth physical channel, and the sixteenth physical channel; separately locks alignment markers of the received data block groups; aligns the four data block groups by using positions of the locked alignment markers as a reference; separately performs FEC decoding processing on the aligned data block groups; performs descrambling processing on FEC-decoded four data block groups; converts each of descrambled four data block groups into a 257-bit data block, converts each of the four 257-bit data blocks into a 66-bit data block; and reassembles the four data blocks that are converted into 66-bit data blocks, to obtain received data.

During specific implementation, when receiving the first data block group from the first physical channel, the second physical channel, the third physical channel, and the fourth physical channel, the receiving device may receive the first sub-data segment of the first data block group from the first physical channel, receive the second sub-data segment of the first data block group from the second physical channel, receive the third sub-data segment of the first data block group from the third physical channel, receive the fourth sub-data segment of the first data block group from the fourth physical channel, and reassemble the first sub-data segment, the second sub-data segment, the third sub-data segment, and the fourth sub-data segment to obtain the first data block group.

Similarly, if the to-be-sent data is split into two data segments, and a transmission rate required by each data block group is 200 Gbps, one data segment is transmitted through eight physical channels. A specific data transmission process is not described in detail in this application.

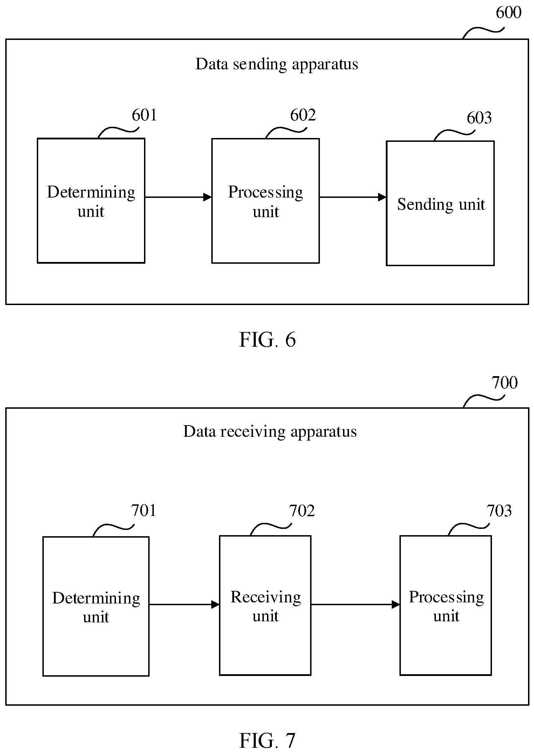

Based on the foregoing embodiments, an embodiment of this application further provides a data sending apparatus. The apparatus may be configured to perform the data sending method shown in FIG. 2. Refer to FIG. 6. A data sending apparatus 600 includes a determining unit 601, a processing unit 602, and a sending unit 603.

The determining unit 601 is configured to determine a plurality of non-faulty physical channels from a plurality of physical channels.

The processing unit 602 is configured to split and encode to-be-sent data to obtain a plurality of encoded data segments.

The sending unit is configured to transmit the plurality of encoded data segments through the plurality of non-faulty physical channels.

Optionally, the processing unit 602 is specifically configured to: split the to-be-sent data into a plurality of data segments of a same length, and encode each data segment.

According to the invention, the sending unit 603 is specifically configured to: determine a transmission rate required by a first data segment in the plurality of encoded data segments, and send the first data segment through at least one non-faulty physical channel based on the transmission rate required by the first data segment.

According to the invention, the sending unit 603 is specifically configured to: determine a transmission rate of each physical channel; and determine, based on a ratio of the transmission rate required by the first data segment to the transmission rate of each physical channel, the at least one physical channel used for transmitting the first data segment, and send the first data segment through the at least one physical channel.

Optionally, the determining unit 601 is specifically configured to: send test data to a receiving device through the plurality of physical channels; and determine the plurality of non-faulty physical channels from the plurality of physical channels based on a feedback of the receiving device on the test data.

It should be noted that the data sending apparatus 600 shown in FIG. 6 may be configured to perform the data sending method shown in FIG. 2. For an implementation that is not described in detail in the embodiment of the data sending apparatus 600, refer to related descriptions in the data sending method shown in FIG. 2.

Based on the foregoing embodiments, an embodiment of this application further provides a data receiving apparatus. The apparatus may be configured to perform the data receiving method shown in FIG. 2. Refer to FIG. 7. A data receiving apparatus 700 includes a determining unit 701, a receiving unit 702, and a processing unit 703.

The determining unit 701 is configured to determine a plurality of non-faulty physical channels from a plurality of physical channels.

The receiving unit 702 is configured to receive a plurality of data segments from the plurality of non-faulty physical channels.

The processing unit 703 is configured to separately decode the plurality of data segments to obtain a plurality of decoded data segments, and reassemble the plurality of decoded data segments to obtain received data.

Optionally, the receiving unit 702 is specifically configured to receive the plurality of data segments of a same length from the plurality of non-faulty physical channels.

According to the invention, the receiving unit 702 is specifically configured to: determine a transmission rate required by a second data segment in the plurality of data segments, and receive the second data segment through at least one non-faulty physical channel based on the transmission rate required by the second data segment.

According to the invention, the receiving unit 702 is specifically configured to: determine a transmission rate of each physical channel; and determine, based on a ratio of the transmission rate required by the second data segment to the transmission rate of each physical channel, the at least one physical channel used for transmitting the second data segment, and receive the second data segment through the at least one physical channel.

Optionally, the determining unit 703 is specifically configured to: receive test data sent by a sending device, and send a feedback on the test data to the sending device based on a receiving status of the test data.

It should be noted that the data receiving apparatus 700 shown in FIG. 7 may be configured to perform the data receiving method shown in FIG. 2. For an implementation that is not described in detail in the embodiment of the data receiving apparatus 700, refer to related descriptions in the data receiving method shown in FIG. 2.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto the computer or the any other programmable data processing device, so that a series of operations and steps are performed on the computer or the any other programmable device, thereby generating computer-implemented processing. Therefore, the instructions executed on the computer or the any other programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims.

## Claims

1. A data sending method, comprising:
determining, by a transmit end, TX, a plurality of non-faulty physical channels from a plurality of physical channels;
splitting and encoding, by the TX, to-be-sent data to obtain a plurality of encoded data segments; and
transmitting, by the TX, the plurality of encoded data segments through the plurality of non-faulty physical channels, comprising:
determining, by the TX, a transmission rate required by a first data segment in the plurality of encoded data segments; and
sending the first data segment through at least one non-faulty physical channel based on the transmission rate required by the first data segment,
**characterized in that**
the sending the first data segment through at least one non-faulty physical channel based on the transmission rate required by the first data segment comprises:
determining a transmission rate of each physical channel; and
determining, based on a ratio of the transmission rate required by the first data segment to the transmission rate of each physical channel, the at least one non-faulty physical channel used for transmitting the first data segment, and sending the first data segment through the at least one non-faulty physical channel.

2. The sending method according to claim 1, wherein the splitting and encoding, by the TX, to-be-sent data comprises:
splitting, by the TX, the to-be-sent data into a plurality of data segments of a same length, and separately encoding each data segment.

3. The sending method according to claim 1 or 2, wherein the determining, by a transmit end, TX, a plurality of non-faulty physical channels from a plurality of physical channels comprises:
sending, by the TX, test data to a receive end, RX, through the plurality of physical channels; and
determining, by the TX, the plurality of non-faulty physical channels from the plurality of physical channels based on a feedback of the RX on the test data.

4. A data receiving method, comprising:
determining, by a receive end, RX, a plurality of non-faulty physical channels from a plurality of physical channels;
receiving, by the RX, a plurality of data segments from the plurality of non-faulty physical channels, comprising:
determining, by the RX, a transmission rate required by a second data segment in the plurality of data segments; and
receiving the second data segment through at least one non-faulty physical channel based on the transmission rate required by the second data segment; and
decoding, by the RX, the plurality of data segments to obtain a plurality of decoded data segments, and reassembling the plurality of decoded data segments to obtain received data,
**characterized in that**
the receiving the second data segment through at least one non-faulty physical channel based on the transmission rate required by the second data segment comprises:
determining a transmission rate of each physical channel; and
determining, based on a ratio of the transmission rate required by the second data segment to the transmission rate of each physical channel, the at least one non-faulty physical channel used for transmitting the second data segment, and receiving the second data segment through the at least one non-faulty physical channel.

5. The receiving method according to claim 4, wherein the receiving, by the RX, a plurality of data segments from the plurality of non-faulty physical channels comprises:
receiving, by the RX, the plurality of data segments of a same length from the plurality of non-faulty physical channels.

6. The receiving method according to claim 4 or 5, wherein the method further comprises:
receiving, by the RX, test data sent by a transmit end, TX; and
sending, by the RX, a feedback on the test data to the TX based on a receiving status of the test data.

7. A data sending apparatus (600), comprising a determining unit (601), a processing unit (602) and a sending unit (603), wherein the determining unit (601), the processing unit (602) and the sending unit (603) are enabled to perform the method according to any one of claims 1 to 3.

8. A data receiving apparatus (700), comprising: a determining unit (701), a processing unit (703) and a receiving unit (702), wherein the determining unit (701), the processing unit (703) and the receiving unit (702) are enabled to perform the method according to any one of claims 4 to 6.

## Patentansprüche

1. Datensendeverfahren, Folgendes umfassend:
Bestimmen einer Vielzahl von nicht fehlerhaften physischen Kanälen aus einer Vielzahl von physischen Kanälen durch ein Übertragungsende (transmit end, TX);
Aufteilen und Codieren von zu sendenden Daten durch das TX, um eine Vielzahl von codierten Datensegmenten zu erlangen; und
Übertragen der Vielzahl von codierten Datensegmenten durch das TX über die Vielzahl von nicht fehlerhaften physischen Kanälen, Folgendes umfassend:
Bestimmen einer Übertragungsrate, die durch ein erstes Datensegment in der Vielzahl von codierten Datensegmenten erforderlich ist, durch das TX; und
Senden des ersten Datensegments über mindestens einen nicht fehlerhaften physischen Kanal basierend auf der Übertragungsrate, die durch das erste Datensegment erforderlich ist,
**dadurch gekennzeichnet, dass**
das Senden des ersten Datensegments über mindestens einen nicht fehlerhaften physischen Kanal basierend auf der Übertragungsrate, die durch das erste Datensegment erforderlich ist, Folgendes umfasst:
Bestimmen einer Übertragungsrate von jedem physischen Kanal; und
Bestimmen, basierend auf einem Verhältnis der Übertragungsrate, die durch das erste Datensegment erforderlich ist, zu der Übertragungsrate von jedem physischen Kanal, des mindestens einen nicht fehlerhaften physischen Kanals, der zum Übertragen des ersten Datensegments verwendet wird, und Senden des ersten Datensegments über den mindestens einen nicht fehlerhaften physischen Kanal.

2. Sendeverfahren gemäß Anspruch 1, wobei das Aufteilen und Codieren der zu sendenden Daten durch das TX Folgendes umfasst: Aufteilen der zu sendenden Daten durch das TX in eine Vielzahl von Datensegmenten einer gleichen Länge und separates Codieren jedes Datensegments.

3. Sendeverfahren gemäß Anspruch 1 oder 2, wobei das Bestimmen einer Vielzahl von nicht fehlerhaften physischen Kanälen aus einer Vielzahl von physischen Kanälen durch ein Übertragungsende, TX, Folgendes umfasst:
Senden von Testdaten durch das TX an ein Empfangsende (receive end, RX) über die Vielzahl von physischen Kanälen; und
Bestimmen der Vielzahl von nicht fehlerhaften physischen Kanälen durch das TX aus der Vielzahl von physischen Kanälen basierend auf einer Rückkopplung des RX zu den Testdaten.

4. Datenempfangsverfahren, Folgendes umfassend:
Bestimmen einer Vielzahl von nicht fehlerhaften physischen Kanälen aus einer Vielzahl von physischen Kanälen durch ein Empfangsende, RX;
Empfangen einer Vielzahl von Datensegmenten durch das RX von der Vielzahl von nicht fehlerhaften physischen Kanälen, Folgendes umfassend:
Bestimmen einer Übertragungsrate, die durch ein zweites Datensegment in der Vielzahl von Datensegmenten erforderlich ist, durch das RX; und
Empfangen des zweiten Datensegments über mindestens einen nicht fehlerhaften physischen Kanal basierend auf der Übertragungsrate, die durch das zweite Datensegment erforderlich ist; und
Decodieren der Vielzahl von Datensegmenten durch das RX, um eine Vielzahl von decodierten Datensegmenten zu erlangen, und Wiederzusammensetzen der Vielzahl von decodierten Datensegmenten, um empfangene Daten zu erlangen,
**dadurch gekennzeichnet, dass**
das Empfangen des zweiten Datensegments über mindestens einen nicht fehlerhaften physischen Kanal basierend auf der Übertragungsrate, die durch das zweite Datensegment erforderlich ist, Folgendes umfasst:
Bestimmen einer Übertragungsrate von jedem physischen Kanal; und
Bestimmen, basierend auf einem Verhältnis der Übertragungsrate, die durch das zweite Datensegment erforderlich ist, zu der Übertragungsrate von jedem physischen Kanal, des mindestens einen nicht fehlerhaften physischen Kanals, der zum Übertragen des zweiten Datensegments verwendet wird, und Empfangen des zweiten Datensegments über den mindestens einen nicht fehlerhaften physischen Kanal.

5. Empfangsverfahren gemäß Anspruch 4, wobei das Empfangen einer Vielzahl von Datensegmenten durch das RX von der Vielzahl von nicht fehlerhaften physischen Kanälen Folgendes umfasst:
Empfangen der Vielzahl von Datensegmenten einer gleichen Länge durch das RX von der Vielzahl von nicht fehlerhaften physischen Kanälen.

6. Empfangsverfahren gemäß Anspruch 4 oder 5, wobei das Verfahren ferner Folgendes umfasst:
Empfangen von Testdaten, die durch ein Übertragungsende, TX, gesendet werden, durch das RX; und
Senden einer Rückkopplung zu den Testdaten an das TX durch das RX, basierend auf einem Empfangsstatus der Testdaten.

7. Datensendegerät (600), umfassend eine Bestimmungseinheit (601), eine Verarbeitungseinheit (602) und eine Sendeeinheit (603), wobei die Bestimmungseinheit (601), die Verarbeitungseinheit (602) und die Sendeeinheit (603) in der Lage sind, das Verfahren gemäß einem der Ansprüche 1 bis 3 durchzuführen.

8. Datenempfangsgerät (700), Folgendes umfassend: eine Bestimmungseinheit (701), eine Verarbeitungseinheit (703) und eine Empfangseinheit (702), wobei die Bestimmungseinheit (701), die Verarbeitungseinheit (703) und die Empfangseinheit (702) in der Lage sind, das Verfahren gemäß einem der Ansprüche 4 bis 6 durchzuführen.

## Revendications

1. Procédé d'envoi de données, comprenant :
la détermination, au moyen d'une extrémité d'émission, TX, d'une pluralité de canaux physiques non défectueux provenant d'une pluralité de canaux physiques ;
la division et le codage, au moyen de la TX, de données à envoyer pour obtenir une pluralité de segments de données codés ; et
l'émission, au moyen de la TX, de la pluralité de segments de données codés à travers la pluralité de canaux physiques non défectueux, comprenant :
la détermination, au moyen de la TX, d'un débit d'émission requis par un premier segment de données dans la pluralité de segments de données codés ; et
l'envoi du premier segment de données à travers au moins un canal physique non défectueux en fonction du débit d'émission requis par le premier segment de données,
**caractérisé en ce que**
l'envoi du premier segment de données à travers au moins un canal physique non défectueux en fonction du débit d'émission requis par le premier segment de données comprend :
la détermination d'un débit d'émission de chaque canal physique ; et
la détermination, en fonction d'un rapport entre le débit d'émission requis par le premier segment de données et le débit d'émission de chaque canal physique, de l'au moins un canal physique non défectueux utilisé pour émettre le premier segment de données, et l'envoi du premier segment de données à travers l'au moins un canal physique non défectueux.

2. Procédé d'envoi selon la revendication 1, dans lequel la division et le codage, au moyen de la TX, de données à envoyer comprennent :
la division, au moyen de la TX, des données à envoyer en une pluralité de segments de données d'une même longueur, et le codage séparément de chaque segment de données.

3. Procédé d'envoi selon la revendication 1 ou 2, dans lequel la détermination, au moyen d'une extrémité d'émission, TX, d'une pluralité de canaux physiques non défectueux provenant d'une pluralité de canaux physiques comprend :
l'envoi, au moyen de la TX, de données de test à une extrémité de réception, RX, à travers la pluralité de canaux physiques ; et
la détermination, au moyen de la TX, de la pluralité de canaux physiques non défectueux à partir de la pluralité de canaux physiques en fonction d'une rétroaction de la RX sur les données de test.

4. Procédé de réception de données, comprenant :
la détermination, au moyen d'une extrémité de réception, RX, d'une pluralité de canaux physiques non défectueux provenant d'une pluralité de canaux physiques ;
la réception, au moyen de la RX, d'une pluralité de segments de données provenant de la pluralité de canaux physiques non défectueux, comprenant :
la détermination, au moyen de la RX, d'un débit d'émission requis par un second segment de données dans la pluralité de segments de données ; et
la réception du second segment de données à travers au moins un canal physique non défectueux en fonction du débit d'émission requis par le second segment de données ; et
le décodage, au moyen de la RX, de la pluralité de segments de données pour obtenir une pluralité de segments de données décodés, et le réassemblage de la pluralité de segments de données décodés pour obtenir des données reçues,
**caractérisé en ce que**
la réception du second segment de données à travers au moins un canal physique non défectueux en fonction du débit d'émission requis par le second segment de données comprend :
la détermination d'un débit d'émission de chaque canal physique ; et
la détermination, en fonction d'un rapport entre le débit d'émission requis par le second segment de données et le débit d'émission de chaque canal physique, de l'au moins un canal physique non défectueux utilisé pour émettre le second segment de données, et la réception du second segment de données à travers l'au moins un canal physique non défectueux.

5. Procédé de réception selon la revendication 4, dans lequel la réception, au moyen de la RX, d'une pluralité de segments de données provenant de la pluralité de canaux physiques non défectueux comprend :
la réception, au moyen de la RX, de la pluralité de segments de données d'une même longueur provenant de la pluralité de canaux physiques non défectueux.

6. Procédé de réception selon la revendication 4 ou 5, dans lequel le procédé comprend également :
la réception, au moyen de la RX, de données de test émises par une extrémité d'émission, TX ; et
l'envoi, au moyen de la RX, d'une rétroaction sur les données de test à la TX en fonction d'un état de réception des données de test.

7. Appareil d'envoi de données (600), comprenant une unité de détermination (601), une unité de traitement (602) et une unité d'envoi (603), dans lequel l'unité de détermination (601), l'unité de traitement (602) et l'unité d'envoi (603) sont capables de mettre en œuvre le procédé selon l'une quelconque des revendications 1 à 3.

8. Appareil de réception de données (700), comprenant : une unité de détermination (701), une unité de traitement (703) et une unité de réception (702), dans lequel l'unité de détermination (701), l'unité de traitement (703) et l'unité de réception (702) sont capables de mettre en œuvre le procédé selon l'une quelconque des revendications 4 à 6.
